# EUROPEAN PATENT APPLICATION

(11) **EP 3 185 475 A1**
(43) Date of publication of application: **28.06.2017**
(21) Application number: 15759016.7
(22) Date of filing: 08.01.2015
(51) Int. Cl.: H04L 12/24

(54) **RACK DIAGRAM DISPLAY METHOD AND APPARATUS**

(30) Priority: 22.08.2014 CN 201410419206
(71) Applicant: ZTE Corporation, Shenzhen, Guangdong 518057 (CN)
(72) Inventor: FENG, Jiaojiao, Shenzhen Guangdong 518057 (CN)
(74) Representative: Deambrogi, Edgardo
(86) International application number: PCT/CN2015/070382
(87) International publication number: WO 2015/131665

(57) **Abstract**

The disclosure discloses a method and device for displaying a rack diagram. The method for displaying the rack diagram of the disclosure includes: configuration data of the rack diagram uploaded by a network element device is acquired, moreover the configuration data of the rack diagram includes model data of a management object, a line object, a rack, a shelf and a slot which are abstracted for the network element device based on a management object model; the rack diagram of the network element device is drawn according to the configuration data of the rack diagram, and the rack diagram is displayed; a resource state of the management object which is sent by the network element device is acquired; and the resource state of the management object is displayed on the rack diagram. By means of the method of the disclosure, resource states of management objects and a manner of a connection between the management objects may be visually displayed in an interface, so as to improve monitoring efficiency of a network management system to the network element device, thereby facilitating a user in quickly positioning and troubleshooting at least one fault of the network element device.

## Description

### Technical field

The disclosure relates to the field of wireless communication network management technology, and in particular to a method and device for displaying a rack diagram.

### Background

A local Operation and Maintains Module NodeB (OMMB) network management system of a Software Defined Radio (SDR) unified base station network element is an operation and maintenance support management system of a multi-mode SDR product for supporting a flexible networking and flexible deployment of the multi-mode SDR, and is a component facing base station operation and maintenance management. Since configuration management provides a main function of modifying a configuration of a base station, and needs to adjust parameters and debug services in real time according to an actual operation of a network element during maintenance of a network management system, which is a very important part of an operation and maintenance center (referred to as OMC) management. The network management system is relatively large and has many subsystems, and a wireless product service has a higher threshold for customer service users and operation and maintenance users. Therefore, the network management system has a relatively poor usability.

A configuration and monitoring interface of a current OMMB network management product are separated from each other. For NodeB-related alarm information, a separate interface is required for display; for NodeB hardware device status information, the separate interface of the OMMB merely provides to display static configuration; and for NodeB transmission information display, the separate interface of the OMMB merely provides to display static configuration. For cell control state information, the separate interface of the OMMB provides to statically display at least one table; for wireless air interface information, or information related to physical channels, the OMMB is not visually displayed. Due to a Key Performance Indicator (KPI) display in service parameters being separated into multiple interfaces, multiple tables are separated from each other, which causes that wiring relations among the multiple tables cannot be displayed in a graphical way, and multiple services are separated from each other, which causes that correlations among the multiple services cannot be observed.

Based on a monitoring of the current network management for an operation of the base station, from a point of after sale, a state of the base station can be monitored through user complaints or extracting, by the customer service users, current network KPI data, and then at least one fault NodeB alarm is captured by the customer service users and to be sent to developers for performing data analysis. The developers may position only after informing support personnel of an offending party of capturing develop information such as some measurement logs. The out-field maintenance colleagues are only responsible for capturing information and returning the captured information to the developers for positioning problems. It may be seen that recognition of the customer service users for the base station may most likely stay in a informing phase of capturing the base station throughout a troubleshooting process, however problems of the NodeB are not necessarily displayed only through an alarm. When other information about monitoring of the NodeB may be visually displayed with the alarm, there is no doubt that most of base station problems are solved in a front field, without rear supports and communications between front and rear, thereby greatly improving an efficiency of positioning and troubleshooting.

From a perspective of customers of the offending party, the customers first want to reduce customer complaints and improve user online time, and during an operation of the base station, wish that current network KPI data is perfect, which depends on a rapid identification of problem sites to solve a fault to improve the KPI. Therefore, means to solve the problem need to be simple, convenient, accurate, and intuitive, to ensure that the problem is solved rapidly and efficiently. At the same time, the developers and operation and maintenance users may also find, in a customer point of view, that customers need our fast positioning problems. If a simple, convenient, accurate, and intuitive monitoring method may be provided, it will undoubtedly enhance a competitiveness of products for customers to enhance impression.

In summary, a application of the current OMMB network management system to position and troubleshoot at least one network device fault is low in efficiency and poor in user experience.

### Summary

A technical problem to be solved by the disclosure is to provide a method and device for displaying a rack diagram, so as to solve a problem that an application of a current OMMB network management system to position and troubleshoot at least one network device fault is low in efficiency.

In order to solve the above technical problem, one embodiment of the disclosure provides a method, which is applied to an OMMB network management system, for displaying a shelf diagram, including the following steps:
acquiring configuration data of the rack diagram uploaded by a network element device, wherein the configuration data of the rack diagram includes model data of a management object, a line object, a rack, a shelf and a slot which are abstracted for the network element device based on a management object model; drawing, according to the configuration data of the rack diagram, the rack diagram of the network element device and displaying the rack diagram; acquiring a resource state of the management object which is sent by the network element device; and displaying the resource state of the management object on the rack diagram.

In an example embodiment, displaying the resource state of the management object on the rack diagram includes: drawing an indicator light for indicating the resource state of the management object on the rack diagram; and displaying the resource state of the management object by drawing a color of the indicator light.

In an example embodiment, drawing the indicator light for indicating the resource state of the management object on the rack diagram includes: drawing indicator lights of different shapes for indicating different types of operating states on the management object on the rack diagram; when resource states of the management object include different types of operating states, displaying the resource state of the management object by drawing the color of the indicator light includes: displaying an operation state of the management object by drawing, according to a type of a operation state of the management object, a color of a indicator light of a corresponding shape.

In an example embodiment, the resource state includes a fault state or a normal state, a blocking state or a de-blocking state.

In an example embodiment, the management object includes at least one of a PlugInUnit and a SdrDeviceGroup.

In an example embodiment, the method further includes: identifying a single switching board and a single radio frequency remote board in the rack diagram according to wireless service cell relation.

In an example embodiment, the method further includes: identifying a wire connecting the single switching board with the single radio frequency remote board on the rack diagram.

Similarly, in order to solve the above technical problem, another embodiment of the disclosure also provides a device, which is applied to an OMMB network management system, for displaying a rack diagram, including: a data acquiring component and a drawing displaying component; and the data acquiring component is arranged to acquire configuration data of the rack diagram uploaded by a network element device, wherein the configuration data of the rack diagram includes model data of a management object, a rack, a shelf and a slot which are abstracted for the network element device based on a management object model; and acquire a resource state of the management object which is sent by the network element device; and the drawing displaying component is arranged to draw, according to the configuration data of the rack diagram, the rack diagram of the network element device and display the rack diagram; and display the resource state of the management object on the rack diagram.

In an example embodiment, the drawing displaying component is arranged to draw an indicator light for indicating the resource state of the management object on the rack diagram; and display the resource state of the management object by drawing a color of the indicator light.

In an example embodiment, the drawing displaying component is arranged to draw indicator lights of different shapes for indicating different types of operating states on the management object on the rack diagram; and when resource states of the management object include different types of operating states, display an operation state of the management object by drawing, according to a type of a operation state of the management object, a color of a indicator light of a corresponding shape.

In an example embodiment, the management object includes at least one of a PlugInUnit and a SdrDeviceGroup.

In an example embodiment, the drawing displaying component is further arranged to identify a single switching board and a single radio frequency remote board in the rack diagram according to wireless service cell relation.

In an example embodiment, the drawing displaying component is further arranged to identify a wire connecting the single switching board with the single radio frequency remote board on the rack diagram.

The disclosure has the advantages that:
The embodiments of the disclosure provide a method and device for displaying the rack diagram, which may quickly position and troubleshoot at least one fault of the network element device; the method and device for displaying a rack diagram of the disclosure includes: configuration data of the rack diagram uploaded by a network element device is acquired, moreover the configuration data of the rack diagram includes model data of a management object, a line object, a rack, a shelf and a slot which are abstracted for the network element device based on a management object model; the rack diagram of the network element device is drawn according to the configuration data of the rack diagram, and the rack diagram is displayed; a resource state of the management object which is sent by the network element device is acquired; and the resource state of the management object is displayed on the rack diagram. By means of the method of the disclosure, resource states of management objects and a manner of a connection between the management objects may be visually displayed in an interface, so as to improve monitoring efficiency of a network management system to the network element device, thereby facilitating a user in quickly positioning and troubleshooting at least one fault of the network element device. Compared with the related art, front customer service users may solve the at least one fault in a front field, without rear supports and communications between front and rear, thereby greatly improving efficiency of positioning and troubleshooting of the at least one fault, and enhancing the user experience.

### Brief description of the drawings

Fig. 1 shows a flowchart schematic diagram of a method for displaying a rack diagram according to a first embodiment of the disclosure;
Fig. 2 shows a descriptive schematic diagram of a management object model according to a first embodiment of the disclosure;
Fig. 3 shows a content schematic diagram of a configuration data file according to a first embodiment of the disclosure;
Fig. 4 shows a structural schematic diagram of a network management system according to a first embodiment of the disclosure;
Fig. 5 shows a flowchart schematic diagram of a data loading process of a rack diagram according to a first embodiment of the disclosure;
Fig. 6 shows an initialized rack diagram according to a first embodiment of the disclosure;
Fig. 7 shows a flowchart schematic diagram of a process of displaying a resource state of a management object according to a first embodiment of the disclosure;
Fig. 8 shows a format schematic diagram of a state file according to a first embodiment of the disclosure;
Fig. 9 shows a schematic diagram of a rack diagram data in which an indicator light is drawn according to a first embodiment of the disclosure;
Fig. 10 shows a schematic diagram of a wire in which the wireless service TOPO relationship is drawn according to a first embodiment of the disclosure; and
Fig. 11 is a structural schematic diagram of a device for displaying a rack diagram according to a second embodiment of the disclosure.

### Detailed description

The disclosure will now be described in further detail with reference to the accompanying drawings.

### Example embodiment 1:

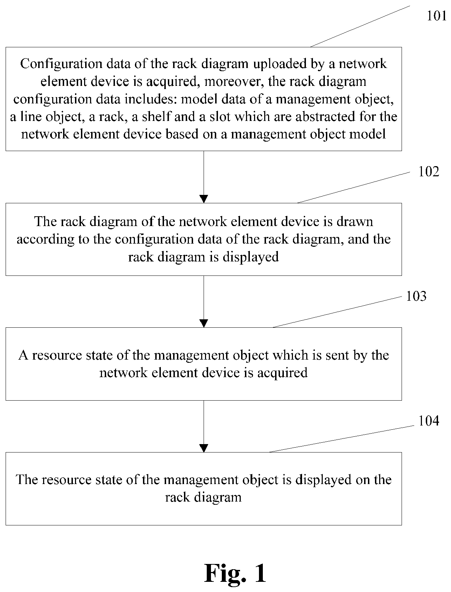

Considering a problem that the current OMMB network management system is inefficient in fault positioning and troubleshooting to the network element device; the present embodiment provides a method for displaying a rack diagram, applied to the OMMB network management system as shown in Fig. 1, including the following steps.

At Step 101: Configuration data of the rack diagram uploaded by a network element device is acquired, moreover, the rack diagram configuration data includes: model data of a management object, a line object, a rack, a shelf and a slot which are abstracted for the network element device based on a management object model.

The main body implementing the method steps in the present embodiment may be an OMMB client, which may request the network element to upload the configuration data of the rack diagram. Specifically, in the OMMB network management system, the OMMB client starts the rack diagram in the OMMB client, which is an initialization task. The OMMB client initiates a request to the network element device after the task is started. After receiving the request, the network element device uploads the configuration data of the current rack diagram to the OMMB client.

In the present embodiment, the configuration data of the rack diagram is model data which is abstracted based on the management object model; specifically, it is possible to set a management object model of the rack diagram for the network element device, and then abstract a model of the management object, the line object, the rack, the shelf and the slot based on a management object model. In the present embodiment, the management object may include at least one of the PlugInUnit and the SdrDeviceGroup. In the present embodiment, the line object may include optical fibers, feeders, and the like.

The method of the present embodiment may display the rack diagram on the dashboard of the OMMB client. A data object involved on the rack diagram is abstracted based on the management object model, and is scanned into java class through a python script in combination with a management object model property document. A dashboard directly applies these classes to be packaged into a data layer Mo.jar of a data management component.

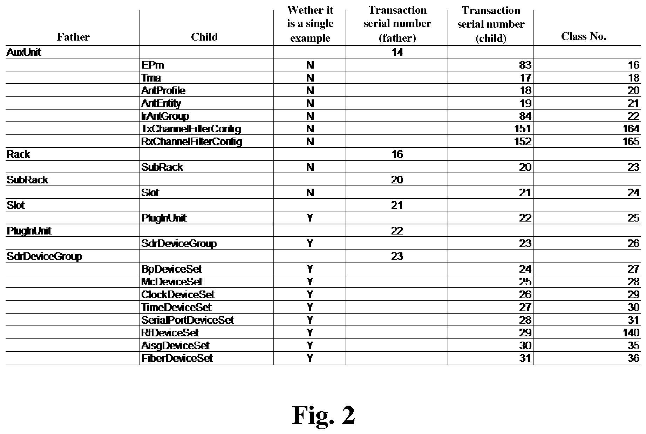

A positioning of a data format of the present embodiment uses a java class, which is completely scanned according to a Maintenance Operation Modules (MOM) design document, which is both a development interface design document and a help document to reduce a maintenance of intermediate links. The management object model based on the rack diagram is abstracted as a rack, a shelf, a slot, a PlugInUnit and a SdrDeviceGroup. The specific management object model is shown in Fig. 2.

In the present embodiment, the PlugInUnit is divided and abstracted into different PlugInUnits in functions; specifically, for a base station network element, if it is necessary to combine a optical interface combining function, since a TOPO wire is involved, the base station network element is abstracted into a combined unit model; a general single-board functions only need to be abstracted into basic units; and fan boards may be abstracted as fan units.

At Step 102: The rack diagram of the network element device is drawn according to the configuration data of the rack diagram, and the rack diagram is displayed.

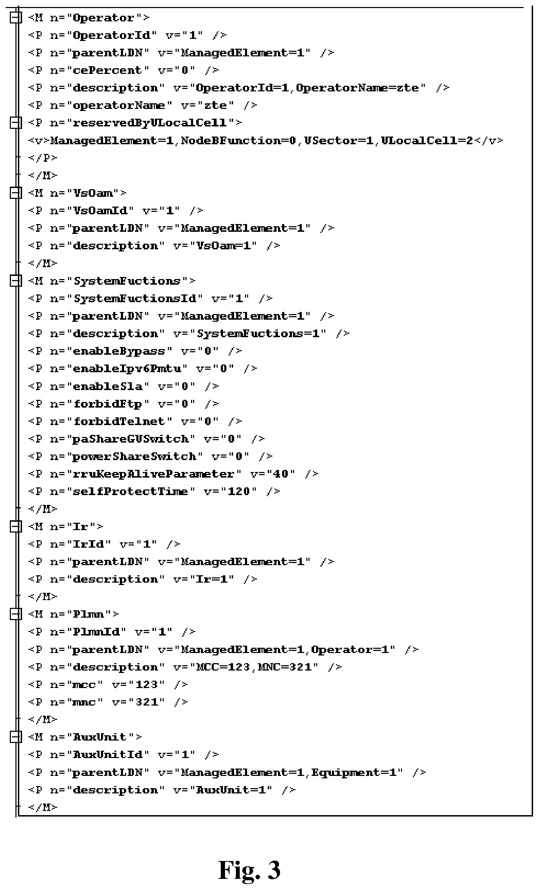

Specifically, after receiving the configuration data, the configuration data may be parsed to acquire model data of the management object, and then an initialized rack diagram is drawn and displayed according to the parsed data. For example, the network element device uploads a configuration data file, which is a modb_tmp.xml. The configuration data file is shown in Fig. 3. The OMMB client parses the configuration data file to acquire the model data of the management object related to the rack diagram. Then, the rack diagram is drawn according to the model data of the acquired management object, a management object unit on the rack diagram corresponds to example data of a single board in a modb file, and finally the drawn rack diagram is displayed.

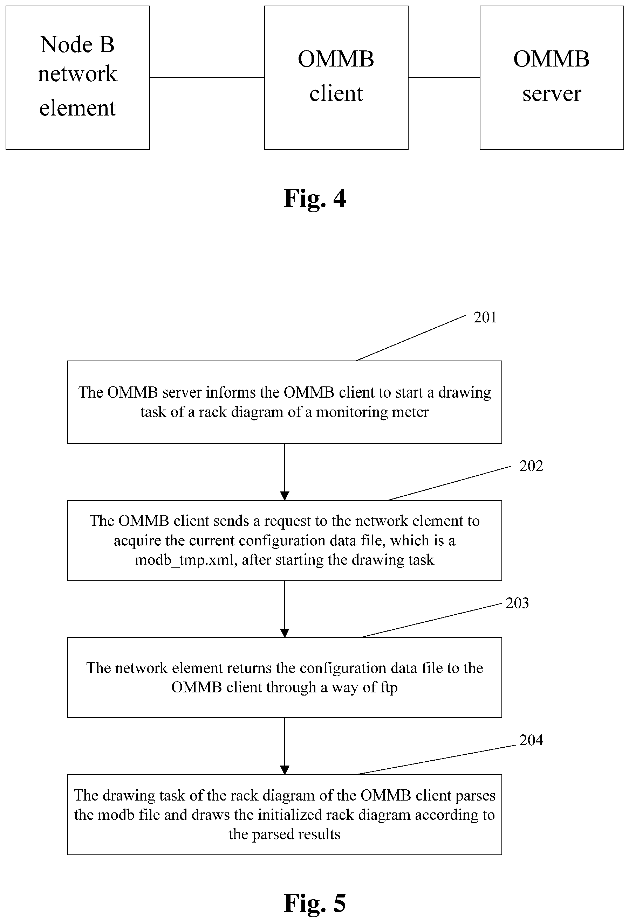

In the method of the present embodiment, Steps 101-102 are a process of loading data of the rack diagram. The process of loading the data of the rack diagram of the present embodiment is described below with the network management system shown in Fig. 4 which includes two network element NodeBs, an OMMB client corresponding to each network element NodeB and an OMMB server corresponding to each network element NodeB; as shown in Fig. 5, the loading process includes the following steps.

At Step 201: The OMMB server informs the OMMB client to start a drawing task of a rack diagram of a monitoring meter.

At Step 202: The OMMB client sends a request to the network element to acquire the current configuration data file, which is a modb_tmp.xml, after starting the drawing task.

At Step 203: The network element returns the configuration data file to the OMMB client through a way of ftp.

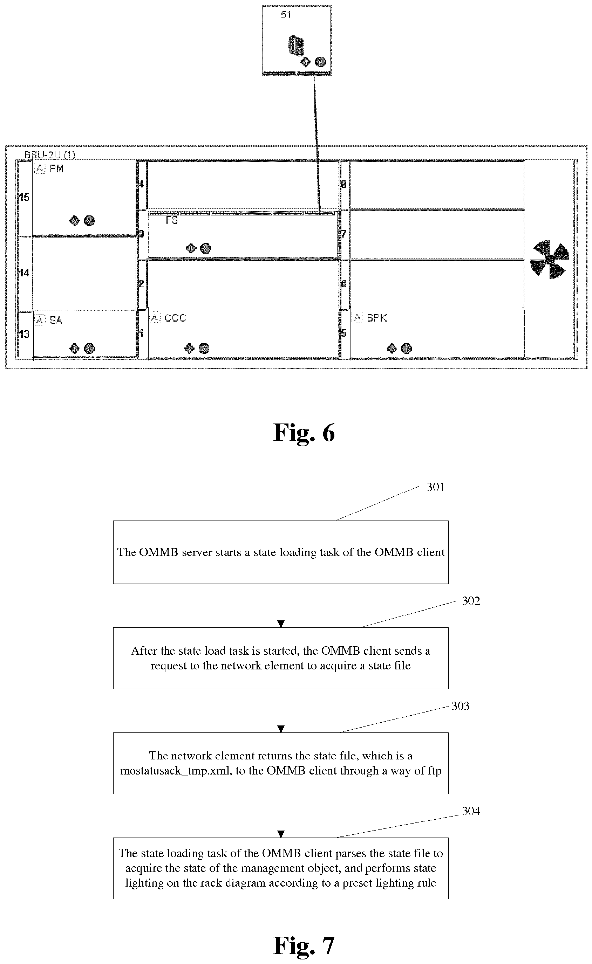

At Step 204: The drawing task of the rack diagram of the OMMB client parses the modb file and draws the initialized rack diagram according to the parsed results. As shown in Fig. 6, the rack diagram initialized in the present embodiment is consisted of a rack, a shelf, a slot, a PlugInUnit, a SdrDeviceGroup and a line object. Visually, a physical connection manner between various objects (namely single board units) connected by line objects is displayed to have one-to-one correspondence with a physical wire.

In the present embodiment, a view of the rack diagram may use a physical object example view to collectively display a distribution and connection relation of physical devices. The physical wire fully corresponds to the actual wire. The minimum granularity which is most concerned about by a user is abstracted and may be displayed immediately. The object wire relation and operating state which are most concerned about by customers and operation and maintenance users from an intuitive point of view.

At Step 103: A resource state of the management object which is sent by the network element device is acquired.

In order to be able to help to quickly position at least one fault, a more intuitive experience is also provided to the customers; in the present embodiment, after drawing and displaying the rack diagram, the resource state of the management object also needs to be reflected on the rack diagram; specifically, the network element device may be required to send a resource state file of the management object, parse a corresponding resource state, and then display the resource state on the rack diagram. In the present embodiment, the resource state includes a single board fault or normal state classified in accordance with a state about whether the single board has an alarm, and a blocking state and a de-blocking state classified in accordance with a state caused by an operation of the single board.

On a network element device side, state collection may be abstracted based on a single board object collection and a service cell object set, respectively indicating whether the management object is blocked and whether the management object is in a fault state.

At Step 104: The resource state of the management object is displayed on the rack diagram.

The method of the present embodiment may display the resource state on the rack diagram in a variety of ways, for example, the resource state of the management object may be displayed by coloring the management object, or the resource state may be displayed on the rack diagram in a way of directly using text prompting, or the resource state may be displayed on the rack diagram by an indicator light.

By means of the rack diagram drawn by the method of the present embodiment, the connection relation between the management objects, such as boards, may be visually displayed, and the resource states of management objects are visually managed, such as whether the management object has a fault or whether the management object is blocked; it may facilitate a user in quickly checking and troubleshooting abnormalities occurring in the network element device, and enhance the user experience.

In addition, the process in which the present embodiment displays the resource state is separated from graphic data, and may largely adapt to a change of an MOM data layer, that is to say, not to change logic of a program due to data change. This design may help the network management manages network elements of more versions and systems. The rack diagram may be run separately only depending on the MOM data layer, and facilitate the embedding in other network management products.

In an example embodiment, in the method of the present embodiment, the step of displaying the resource state of the management object on the rack diagram includes: an indicator light is drawn for indicating the resource state of the management object on the rack diagram; and the resource state of the management object is displayed by drawing the color of the indicator light.

For example, an indicator may be drawn on the rack diagram board unit to indicate the resource state of the single board. Taking whether the single board has a fault as an example, when the single board is in a fault state, the indicator is drawn as red. When the single board is in a normal state, the indicator is drawn as green. It is to be understood that the color of the drawn indicator light in the present embodiment may be set according to needs of the user.

In a case of displaying different types of operating states, one type here corresponds to an operating state caused by one reason, that is, in a case of displaying the operating state caused by different reasons, the method of the present embodiment may display the operating states by coloring the indicator lights of different shapes; specifically, the step of drawing an indicator light for indicating the resource state of the management object in the rack diagram includes: the indicator lights of different shapes are drawn for indicating different types of operating states on the management object on the rack diagram; herein when the resource state includes different types of operating states, the step of displaying the resource state of the management object by drawing the color of the indicator light includes: the operation state of the management object is displayed by drawing the color of the indicator light of the corresponding shape according to the type of the operation state of the management object.

The rack diagram as shown in Fig. 6 draws indicator lights on each single board unit, a diamond indicator light and a circular indicator light; the method of the present embodiment may display the resource state of the single board by drawing colors of the two indicator lights, for example, when the single board is blocked, a diamond indicator light is drawn as yellow, when the single board is unblocked, the diamond indicator light is drawn as green; when the single board has a fault, a circular indicator light is drawn as red, and when the single board is normal, the circular indicator light is drawn green. It is to be understood that a correspondence between the resource state and the color of the indicator light in the present embodiment may be arbitrarily set as long as the resource state may be distinguished.

In an example embodiment, in the present embodiment, the resource state includes a single board fault or normal state classified in accordance with the state about whether the single board has an alarm, and a blocking state and a de-blocking state classified in accordance with the state caused by the operation of the single board. Herein the fault or the normal state belongs to one type of operating states, and the blocking and de-blocking state belongs to one type of operating states.

In order to visually display a uplink and downlink relationship between a FS single switching board and a RRU single radio frequency remote board involved in a service cell, the method of the embodiment method may further include: the single switching board and the single radio frequency remote board are identified on the rack diagram according to a wireless service cell relation.

Specifically, it may be identified by drawing a color of the single switching board and the single radio frequency remote board on the rack diagram to display a position relationship between the single switching board and the single radio frequency remote board.

In an example embodiment, it is also possible to identify a wire connecting the single switching board with the single radio frequency remote board on the rack diagram; specifically, a TOPO wire FiberCable connecting the single switching board with the single radio frequency remote board is drawn on the rack diagram, facilitating users to visually find the TOPO relationship configuration in the wireless cell.

The above Step 103 to Step 104 is the process of the resource state of the management object. The following is also explained in detail by using the network management system shown in Fig. 4. As shown in Fig. 7, after drawing the initialized rack diagram, the following processes are included.

At Step 301: The OMMB server starts a state loading task of the OMMB client.

At Step 302: After the state load task is started, the OMMB client sends a request to the network element to acquire a state file.

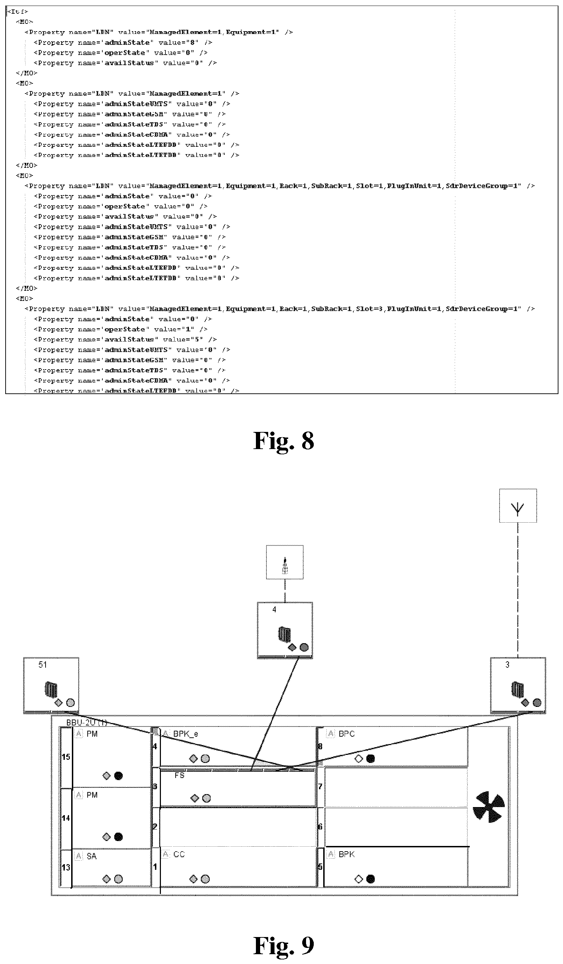

At Step 303: The network element returns the state file, which is a mostatusack_tmp.xml, to the OMMB client through a way of ftp. A format of the state file is shown in Fig. 8.

At Step 304: The state loading task of the OMMB client parses the state file to acquire the state of the management object, and performs state lighting on the rack diagram according to a preset lighting rule.

Currently only a model of <Property name = "adminStateUMTS" value = "0" /> UMTS in the state file is parsed, and the rest of models are not parsed for the follow-up expansion.

A lighting rule of the present embodiment is to color the indicator light according to the correspondence relationship between a preset management object such as a single board state and the shape and color of the indicator light.

Network management developers customize that the management object such as a single board state corresponds to the indicator light of what shape and the indicator light of what color; in the present embodiment, it is classified as a blocking state and an unblocked state according to different states caused by the operation of the single board, and classified as a fault state and a normal state according to whether there is an alarm; for example, based on the rack diagram shown in Fig. 6, it may be defined that the state caused by the operation of the single board has a blocking 1 corresponding to yellow display and has a de-blocking 0 corresponding to green display for the diamond indicator light; in the state caused by whether there is an alarm, 1 indicates fault, and 0 indicates normal for the circular indicator light; the indicator light is circular, 1 fault corresponds to red display, and 0 normal corresponds to green display.

Based on the abovementioned rule convention, after the loading of the data of the rack diagram in Steps 201 to 204 is completed, the method of the present embodiment calls the reloadUnit () operation of the unit MoUnit on the rack diagram according to the rule of state lighting and redraws the status light. The display diagram is shown in Fig. 9. In Fig. 9, the diamond indicator light on a PM single board in a slot 15 is green and the circular indicator light is red; the diamond indicator light on the PM single board in a slot 14 is green and the circular indicator light is red; the diamond indicator light on an SA single board in a slot 13 is green and the circular indicator light is green; the diamond indicator light on a BPK-e single board in a slot 4 is green and the circular indicator light is green; the diamond indicator light on an FS single board in a slot 3 is green and the circular indicator light is green; the diamond indicator light on a CCC single board in a slot 1 is green and the circular indicator light is green; the diamond indicator light on a BPC single board in a slot 8 is yellow and the circular indicator light is red; the diamond indicator light on a BPK single board in a slot 5 is yellow and the circular indicator light is red; and the diamond indicator light on the single board labelled as 51 is green and the circular indicator light is red.

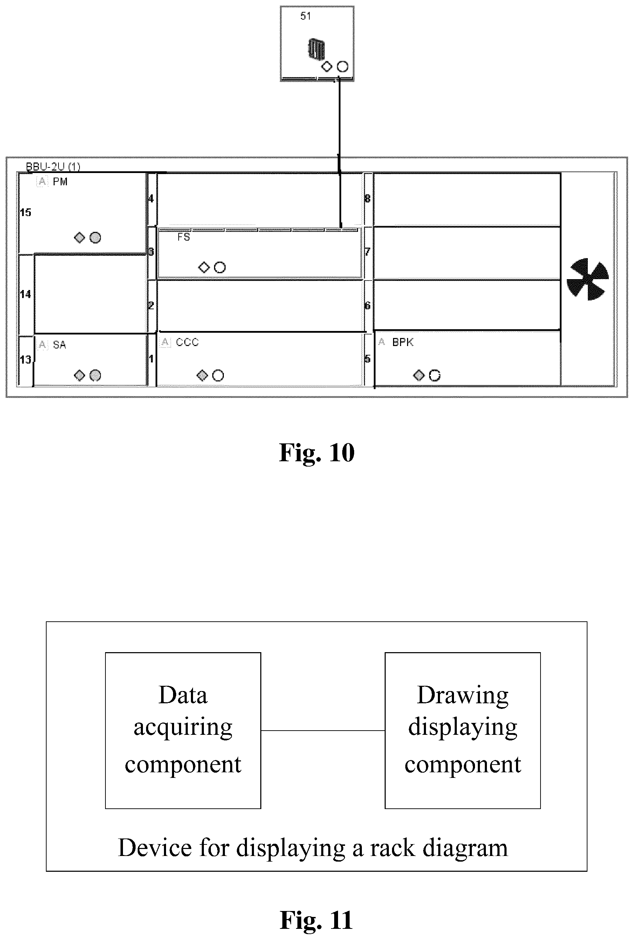

After the resource state is displayed, the method of the present embodiment may display the uplink and downlink relationship between the FS switching board and the RRU radio frequency remote board involved in the service cell and the TOPO wire; after the wireless service cell relation is established, the method of the present embodiment may enable reloadline () operation of the management object unit (namely MoUnit) on the rack diagram, and find the TOPO wire (namely FiberCable) connecting the FS switching board with the RRU radio frequency remote board in the MOM model memory by passing to the FS position and the RRU position in the superior-subordinate relation of FS and RRU so as to draw the TOPO wire relationship in the wireless service, as shown in Fig. 10, facilitating users to visually find TOPO relationship configuration in the wireless cell; in Fig. 10, the diamond indicator light on the FS single board is green and the circular indicator light is green; the diamond indicator light on the PM single board in the slot 15 is green and the circular indicator light is green; the diamond indicator light on the PM single board in the slot 14 is green and the circular indicator light is green; the diamond indicator light on the CCC single board in the slot 1 is green and the circular indicator light is green; the diamond indicator light on the BPK single board in the slot 5 is green and the circular indicator light is red; the single board labelled as 51 in Fig. 10 is the RRU single board, and the diamond indicator light and the circular indicator light thereon are green; therefore, a color filling manner may be used to identify the RRU board, the FS board, and the wire between the RRU board and the FS board. For example, the yellow color is used to fill the RRU board, the FS board, and the wire between the RRU board and the FS board to display to the user.

In the related art, the OMMB network management, NodeB related alarm and fault information, and NodeB hardware device status information may also only provide a static configuration display on the OMMB only through a single interface, and cannot be displayed with the single board on the rack diagram in an associated and visual manner. The operating state of various racks cannot be displayed. For a control state of the service cell, the configuration interface needs to be opened separately, the control state is displayed in a manner of recording with a table, the cell operates the associated the TOPO wire, the associated FS switching control board, and the radio frequency RRU single board involved cannot make an intuitive display.

However, the method of the present embodiment implements displaying the related state information including at least one hardware, the transmission, the alarm, the cell and the air interface information through an intuitive color with a unified interface. The indicators evaluating the NodeB state include that hardware operation, alarm, transmission, cell control information, and air interface information are displayed on a diagram, identifying whether the NodeB is normal through the color recognition, completely significantly increasing the NodeB out field maintenance level, and greatly improving the availability. It has multiple purposes:
1. The front customer service users visually acquire a rack configuration of the base station, hardware operation, single board and base station status information, and cell control information. It has a real-time report and a real-time parsing, it is displayed with an interface, and monitoring is very intuitive and efficient.
2. Single board resources of the rack diagram model and physical wires are customized in a unified way to facilitate to achieve the multi-mode base station unified management, unified monitoring, and good scalability in the base station management of the follow-up multi-mode products.
3. The interface display and network management service are decoupled completely, the shape and color of the network management component may be customized freely, the flexibility is high, and the user experience is better.

### Embodiment 2:

As shown in Fig. 11, the present embodiment provides a device for displaying a rack diagram, including a data acquiring component and a drawing displaying component.

The data acquiring component is arranged to acquire configuration data of the rack diagram uploaded by a network element device, moreover, the configuration data of the rack diagram configuration data includes model data of a management object, a rack, a frame and a slot which are abstracted for the network element device based on a management object model; and acquire a resource state of the management object which is sent by the network element device.

The drawing displaying component is arranged to draw, according to the configuration data of the rack diagram, the rack diagram of the network element device and display the rack diagram; and display the resource state of the management object on the rack diagram.

By means of the device of the disclosure, the resource states of management objects and the manner of the connection between the management objects may be visually displayed in an interface, so as to improve the monitoring efficiency of the network management system to the network element device, thereby facilitating a user in quickly positioning and troubleshooting the fault of the network element device. Compared with the related art, the front customer service users may solve the fault in the front field, without rear supports and the front and rear communications, greatly improving the efficiency of positioning and troubleshooting of the fault, and enhancing the user experience.

In an example embodiment, the drawing displaying component is arranged to draw an indicator light for indicating the resource state of the management object on the rack diagram; and display the resource state of the management object by drawing a color of the indicator light.

The present embodiment may display the resource state of the management object visually by using the color of the indicator light to facilitate users to position and troubleshoot at least one fault of the network element device.

In an example embodiment, the drawing displaying component is arranged to draw indicator lights of different shapes for indicating different types of operating states on the management object on the rack diagram; and when resource states of the management object include different types of operating states, display an operation state of the management object by drawing, according to a type of a operation state of the management object, a color of a indicator light of a corresponding shape.

In an example embodiment, the management object includes at least one of a PlugInUnit and a SdrDeviceGroup.

In an example embodiment, the drawing displaying component is further arranged to identify a single switching board and a single radio frequency remote board in the rack diagram according to wireless service cell relation.

In an example embodiment, the drawing displaying component is further arranged to identify a wire connecting the single switching board with the single radio frequency remote board on the rack diagram.

The device provided by the present embodiment implements displaying the related state information including the hardware, the transmission, the alarm, the cell and the air interface information through an intuitive color with a unified interface. The indicators evaluating the NodeB state include that hardware operation, alarm, transmission, cell control information, and air interface information are displayed on a diagram, identifying whether the NodeB is normal through the color recognition, completely significantly increasing the NodeB out field maintenance level, and greatly improving availability.

The above is a further detailed description of the disclosure in connection with specific embodiments, and it is not to be construed that the specific embodiments of the disclosure are only limited to these descriptions. It will be apparent to the skilled person in the art to which the disclosure pertains that several simple deductions or substitutions are made that fall within the scope of protection of the disclosure without departing from the conception of the disclosure.

### Industrial Applicability

By means of the technical solution provided by the embodiment of the disclosure, at least one fault of the network element device may be quickly positioned and troubleshot; the resource states of management objects and the manner of the connection between the management objects may be visually displayed in an interface, so as to improve a monitoring efficiency of the network management system to the network element device, thereby facilitating a user in quickly positioning and troubleshooting at least one fault of the network element device. Compared with the related art, front customer service users may solve the at least one fault in a front field, without rear supports and communications between front and rear, thereby greatly improving efficiency of positioning and troubleshooting of the at least one fault, and enhancing the user experience.

## Claims

1. A method for displaying a rack diagram, applied to an Operation&Maintains Module NodeB (OMMB) network management system, comprising:
acquiring configuration data of the rack diagram uploaded by a network element device, wherein the configuration data of the rack diagram comprises model data of a management object, a line object, a rack, a shelf and a slot which are abstracted for the network element device based on a management object model;
drawing, according to the configuration data of the rack diagram, the rack diagram of the network element device and displaying the rack diagram;
acquiring a resource state of the management object which is sent by the network element device; and
displaying the resource state of the management object on the rack diagram.

2. The method as claimed in claim 1, wherein displaying the resource state of the management object on the rack diagram comprises:
drawing an indicator light for indicating the resource state of the management object on the rack diagram; and
displaying the resource state of the management object by drawing a color of the indicator light.

3. The method as claimed in claim 2, wherein drawing the indicator light for indicating the resource state of the management object on the rack diagram comprises:
drawing indicator lights of different shapes for indicating different types of operating states on the management object on the rack diagram;
when resource states of the management object comprise different types of operating states, displaying the resource state of the management object by drawing the color of the indicator light comprises:
displaying an operation state of the management object by drawing, according to a type of a operation state of the management object, a color of a indicator light of a corresponding shape.

4. The method as claimed in claim 3, wherein the resource state comprises a fault state or a normal state, a blocking state or a de-blocking state.

5. The method as claimed in any one of claims 1 to 4, wherein the management object comprises at least one of a PlugInUnit and a SdrDeviceGroup.

6. The method as claimed in claim 5, further comprising:
identifying a single switching board and a single radio frequency remote board in the rack diagram according to wireless service cell relation.

7. The method as claimed in claim 6, further comprising:
identifying a wire connecting the single switching board with the single radio frequency remote board on the rack diagram.

8. A device for displaying a rack diagram, applied to an Operation&Maintains Module NodeB (OMMB) network management system, comprising a data acquiring component and a drawing displaying component; wherein
the data acquiring component is arranged to acquire configuration data of the rack diagram uploaded by a network element device, wherein the configuration data of the rack diagram comprises model data of a management object, a rack, a shelf and a slot which are abstracted for the network element device based on a management object model; and acquire a resource state of the management object which is sent by the network element device; and
the drawing displaying component is arranged to draw, according to the configuration data of the rack diagram, the rack diagram of the network element device and display the rack diagram; and display the resource state of the management object on the rack diagram.

9. The device as claimed in claim 8, wherein the drawing displaying component is arranged to draw an indicator light for indicating the resource state of the management object on the rack diagram; and display the resource state of the management object by drawing a color of the indicator light.

10. The device as claimed in claim 9, wherein the drawing displaying component is arranged to draw indicator lights of different shapes for indicating different types of operating states on the management object on the rack diagram; and when resource states of the management object comprise different types of operating states, display an operation state of the management object by drawing, according to a type of a operation state of the management object, a color of a indicator light of a corresponding shape.

11. The device as claimed in any one of claims 8 to 10, wherein the management object comprises at least one of a PlugInUnit and a SdrDeviceGroup.

12. The device as claimed in claim 11, wherein the drawing displaying component is further arranged to identify a single switching board and a single radio frequency remote board in the rack diagram according to wireless service cell relation.

13. The device as claimed in claim 12, wherein the drawing displaying component is further arranged to identify a wire connecting the single switching board with the single radio frequency remote board on the rack diagram.
